# EUROPÄISCHE PATENTANMELDUNG

(11) **EP 2 023 281 A1**
(43) Veröffentlichungstag der Anmeldung: **11.02.2009**
(21) Anmeldenummer: 07015809.2
(22) Anmeldetag: 10.08.2007
(51) Int. Cl.: G06Q 20/00

(54) **Verfahren zur Bestellung und Bezahlung einer Zutrittsberechtigung, zur Überprüfung der Zutrittsberechtigung, zur Erteilung einer Zutrittsberechtigung und/oder zur Bereitstellung von zutrittsbezogenen Informationen**

(71) Anmelder: SkiData AG, 5083 Grödig/Salzburg (AT)
(72) Erfinder: Aigner Roland, 5400 Hallein (AT); Ponert Gregor, 5020 Salzburg (AT)
(74) Vertreter: Haft, von Puttkamer, Berngruber

(57) **Zusammenfassung**

Es wird ein Verfahren zur Bestellung und Bezahlung einer Zutrittsberechtigung, zur Überprüfung der Zutrittsberechtigung, zur Erteilung einer Zutrittsberechtigung und/oder zur Bereitstellung von zutrittsbezogenen Informationen vorgeschlagen, wobei ein zumindest ein der Zutrittsberechtigung zugeordnetes Element enthaltender Datenset in einem Mobiltelefon oder einer dem Mobiltelefon zugeordneten Speichereinheit speicherbar ist und die Überprüfung und/oder die Erteilung der Zugangsberechtigung anhand einer berührungslosen Interaktion zwischen dem Mobiltelefon und einer Zutrittskontrolleinrichtung erfolgt, wobei für den Fall von Zutrittskontrolleinrichtungen, bei denen die Bezahlung beim Verlassen des durch die zumindest eine Zutrittskontrolleinrichtung begrenzten Ortes erfolgt, die Erfassung des Zutritts beim Zutritt über die Zutrittskontrolleinrichtung über ein RFID-fähiges Mobiltelefon und die Interaktion des Mobiltelefons mit der Zutrittskontrolleinrichtung mittels RFID-Technologie durchgeführt wird und wobei zum Zweck der Erteilung und Identifizierung der Zutrittsberechtigung und der Bezahlung derselben eine eineindeutige der Zutrittsberechtigung zugeordnete Transaktionsnummer verwendet wird, welche vom Mobiltelefon auf ein anderes Mobiltelefon berührungslos übertragbar ist.

## Beschreibung

Die vorliegende Erfindung bezieht sich auf Verfahren zur Bestellung und Bezahlung einer Zutrittsberechtigung, zur Überprüfung der Zutrittsberechtigung, zur Erteilung einer Zutrittsberechtigung und/oder zur Bereitstellung von zutrittsbezogenen Informationen, gemäß dem Oberbegriff des Patentanspruchs 1.

Aus dem Stand der Technik ist bekannt, Zutrittstickets für Veranstaltungen nach erfolgter Bestellung an das Mobiltelefon des Bestellers in elektronischer Form zu übermitteln und dort zu speichern. Durch eine Interaktion des das elektronische Ticket enthaltenden Mobiltelefons mit der entsprechenden Zutrittskontrolleinrichtung wird die Zugangsberechtigung des Benutzers überprüft und bei gültigem Zutrittsticket der Einlass gewährt. Hierbei erfolgt die Interaktion zwischen dem Mobiltelefon und der Zutrittskontrolleinrichtung berührungslos, beispielsweise über ein RFID-Verfahren, über Bluetooth® etc.

Beispielsweise ist aus der EP 1166238 B1 ein Verfahren zum Bestellen, Beladen und Verwenden von Zutrittstickets für den Zutritt zur zutrittskontrollierten Dienstvorrichtungen bekannt, im Rahmen dessen Zutrittstickets in einem Speichermodul eines mobilen Kommunikationsendgerätes abgespeichert werden und Daten zwischen diesem Speichermodul und einer Lesevorrichtung einer zutrittskontrollierten Dienstvorrichtung über eine kontaktlose Schnittstelle ausgetauscht werden, wobei das Zutrittsticket von einer Reservationszentrale durch Übermitteln von Bestellinformationen an die genannte Reservationszentrale erfolgt, wobei die Bestellinformationen die Rufnummer des mobilen Kommunikationsendgerätes des Benutzers umfassen. Nach erfolgter Bestellung wird gemäß EP 1166238 B1 das bestellte Zutrittsticket über ein Mobilfunknetz an dasjenige mobile Kommunikationsendgerät übermittelt, welchem die in den Bestellinformationen enthaltene Rufnummer zugeordnet ist.

Dieses bekannte Verfahren weist den Nachteil auf, dass die Angabe der Rufnummer zwingend erforderlich ist. Zum einen besteht hier die Möglichkeit, dass sich der Benutzer bei der Eingabe der Nummer vertippt; zum anderen ist es heutzutage üblich, dass einer Telefonnummer (MSISDN-Nummer) mehrere SIM-Karten zugeordnet sind (beispielsweise ist für das Autotelefon eine erste SIM-Karte und für das Mobiltelefon des Benutzers eine weitere SIM-Karte vorgesehen). Durch die Durchführung des Verfahrens gemäß EP 1166238 B1 kann es daher vorkommen, dass das elektronische Ticket an zwei mobilen Telefonen übermittelt wird und dort gespeichert wird oder dass es an das falsche, zum gewünschten Zeitpunkt nicht zugängliche Mobiltelefon übermittelt wird.

Des weiteren ist das bekannte Verfahren bei Situationen nicht anwendbar, bei denen erst nach Erhalt der Dienstleistung die Bezahlung erfolgen soll, beispielsweise bei Parkhäusern mit Zutrittskontrolleinrichtungen, bei denen die zu zahlende Summe in Abhängigkeit von der Parkdauer bestimmt wird.

Aus der EP 0950968 A1 ist ein mobiles elektronisches Handelssystem bekannt, bei dem ein elektronisches Ticket in einem Mobiltelefon gespeichert wird, wobei die Zutrittsberechtigung des Benutzers durch eine Interaktion des Mobiltelefons mit einer Zutrittskontrolleinrichtung ermittelt wird. Die Bezahlung des Tickets erfolgt über eine Paycard oder über die Telefonrechnung des Mobiltelefons. Auch bei diesen bekannten Verfahren ist die Angabe der Mobiltelefonnummer erforderlich, damit das elektronische Ticket an das Mobiltelefon übermittelt werden kann; das bekannte Verfahren ist zudem bei Situationen nicht anwendbar, bei denen erst nach Erhalt der Dienstleistung die Bezahlung erfolgen soll.

Aus der EP 1424657 A1 der Anmelderin, deren Offenbarungsgehalt vollinhaltlich auch Gegenstand dieser Beschreibung sein soll geht ein elektronisches Ticket für RFID-Systeme zum Datenaustausch mit einem Lesegerät hervor, wobei das Ticket durch ein Mobiltelefon mit einem Mikroprozessor, einem Speicher und einer Codier- und Decodiereinrichtung gebildet wird und in das Mobiltelefon über eine Applikationsschnittstelle eine zusätzliche Hardware und eine Software zur Simulation eines elektronischen Tickets für RFID-Systeme zum Datenaustausch mit dem Lesegerät integriert ist. Hierbei besteht die zusätzliche Hardware aus einer RFID-Antenne sowie einem Sender und einem Empfänger als Schnittstelle zu der RFID-Antenne; der Sender und der Empfänger sind in vorteilhafter Weise direkt an die Codier- und Decodiereinrichtung des Mobiltelefons angeschlossen.

Der vorliegenden Erfindung liegt die Aufgabe zugrunde, Verfahren zur Bestellung und Bezahlung einer Zutrittsberechtigung, zur Überprüfung der Zutrittsberechtigung, zur Erteilung einer Zutrittsberechtigung und/oder zur Bereitstellung von zutrittsbezogenen Informationen anzugeben, durch dessen Durchführung die erwähnten Nachteile der aus dem Stand der Technik bekannten Verfahren vermieden werden. Ein weiteres Ziel der Erfindung ist es, ein Verfahren anzugeben, welches bei Situationen durchgeführt werden kann, bei denen erst nach Erteilung der Zutrittsberechtigung bzw. nach Erhalt der Dienstleistung die Bezahlung erfolgen soll.

Diese Aufgabe wird durch die Merkmale der Patentansprüche 1, 2 und 12 und 13 gelöst. Weitere Ausgestaltungen und Vorteile gehen aus den entsprechenden Unteransprüchen hervor.

Demnach wird gemäß der Erfindung ein Verfahren vorgeschlagen, im Rahmen dessen ein zumindest ein der Zutrittsberechtigung zugeordnetes Element enthaltender Datenset in einem Mobiltelefon oder einer dem Mobiltelefon zugeordneten Speichereinheit speicherbar ist und die Überprüfung und/oder die Erteilung der Zugangsberechtigung anhand einer berührungslosen Interaktion zwischen dem Mobiltelefon und einer Zutrittskontrolleinrichtung erfolgt, wobei für den Fall von Zutrittskontrolleinrichtungen, bei denen die Bezahlung beim Verlassen des durch die zumindest eine Zutrittskontrolleinrichtung begrenzten Ortes erfolgt, die Erfassung des Zutritts beim Zutritt über die Zutrittskontrolleinrichtung über ein RFID-fähiges Mobiltelefon und die Interaktion des Mobiltelefons mit der Zutrittskontrolleinrichtung mittels RFID-Technologie durchgeführt wird. Anstelle eines RFIDfähigen Mobiltelefons kann auch ein weitere RFID-fähige Geräte zur mobilen Kommunikation verwendet werden, wie beispielsweise ein PDA oder ein Pocket-PC.

Die dem Mobiltelefon zugeordnete Speichereinheit kann beispielsweise die SIM-Karte des Telefons, ein Sicherheitsmodul, ein Sicherheitsspeicher, beispielsweise eine SD-Karte, oder ein Speichermodul des Telefons sein.Gemäß der Erfindung wird zum Zweck der Erteilung und Identifizierung der Zutrittsberechtigung und der Bezahlung derselben eine eineindeutige der Zutrittsberechtigung zugeordnete Transaktionsnummer verwendet, welche ein der Zutrittsberechtigung zugeordnetes Element des im Mobiltelefon speicherbaren Datensets darstellt.

Hierbei ist vorgesehen, dass die Transaktionsnummer vom Mobiltelefon auf ein anderes Mobiltelefon berührungslos übertragbar ist. Dadurch wird gewährleistet, dass die Bezahlung der Zutrittsberechtigung durch eine andere Person erfolgen kann, was insbesondere bei Situationen relevant ist, bei denen sich der Zutritt nicht auf eine Person sondern auf eine nicht personenbezogene Dienstleistung bezieht, wie es beispielsweise bei dem zur Verfügungstellen von Parkplätzen der Fall ist. Dadurch kann eine erste Person ein Fahrzeug in ein Parkhaus einfahren und eine zweite Person anhand der Transaktionsnummer bezahlen und ausfahren.

Die Transaktionsnummer kann von dem Mobiltelefon, mittels dessen der Zutritt erfasst worden ist auf ein anderes Mobiltelefon über das GSM-Netzwerk, z.B. als SMS, mittels RFID-Technologie, z.B. NFC-Technologie, über eine Infrarotverbindung, über eine Bluetooth ® -Verbindung oder über eine andere Mobiltelefon-Verbindungstechnologie übertragen werden.

Des weiteren ist vorgesehen, dass beim Verlassen des durch die zumindest eine Zutrittskontrolleinrichtung begrenzten Ortes die Zutrittsberechtigung mittels einer RFID - Interaktion zwischen der Zutrittskontrolleinrichtung und einem Mobiltelefon enthaltend die Transaktionsnummer identifiziert wird, wobei die erforderliche Bezahlung über RFID-Technologie und in dem Mobiltelefon enthaltend die Transaktionsnummer gespeicherten Kreditkarten- oder Bankverbindungsdaten, die an die Zutrittskontrolleinrichtung übermittelt werden, über eine Direktbezahlung über die Telefonnummer des Mobiltelefons enthaltend die Transaktionsnummer, über eine mittels des die Transaktionsnummer enthaltenden Mobiltelefons hergestellte Internetverbindung, über eine Barzahlung oder durch Auslösen einer Kreditkartentransaktion durch Auslesen der Kreditkartendaten von einer maschinenlesbaren oder RFID-lesbaren Kreditkarte erfolgt. Nach erfolgter Bezahlung wird durch die Zutrittskontrolleinrichtung Auslass gewährt.

Für den Fall von Zutrittskontrolleinrichtungen, bei denen die Bezahlung vor dem Verlassen des durch die zumindest eine Zutrittskontrolleinrichtung begrenzten Ortes an einer Bezahleinrichtung bzw. an einem Automaten erfolgen kann, was auch bei einem Parkhaus der Fall sein kann, erfolgt gemäß der Erfindung die Erfassung des Zutritts beim Zutritt über eine Zutrittskontrolleinrichtung über ein RFID-fähiges Mobiltelefon und die Interaktion des Mobiltelefons mit der Zutrittskontrolleinrichtung mittels RFID-Technologie, wobei zum Zweck der Identifizierung der Zutrittsberechtigung und der Bezahlung derselben eine eineindeutige der Zutrittsberechtigung zugeordnete Transaktionsnummer verwendet wird, welche vom Mobiltelefon auf ein anderes Mobiltelefon berührungslos übertragbar ist. Damit eine Bezahlung durchgeführt wird, wird die Zutrittsberechtigung mittels einer RFID - Interaktion zwischen einer Bezahleinrichtung und einem Mobiltelefon enthaltend die Transaktionsnummer identifiziert. Nach der Identifizierung der Zutrittsberechtigung anhand der Transaktionsnummer kann die Bezahlung über in dem Mobiltelefon enthaltend die Transaktionsnummer gespeicherten Kreditkarten- oder Bankverbindungsdaten, die an eine Bezahleinrichtung übermittelt werden, über eine Direktbezahlung über die Telefonnummer des Mobiltelefons enthaltend die Transaktionsnummer, über eine mittels des Mobiltelefons enthaltend die Transaktionsnummer hergestellte Internetverbindung, über eine Barzahlung oder durch Auslösen einer Kreditkartentransaktion durch Auslesen der Kreditkartendaten von einer maschinenlesbaren oder RFID-lesbaren Kreditkarte erfolgen.

Im Rahmen einer vorteilhaften Weiterbildung der Erfindung wird vorgeschlagen, dass nach erfolgter Bezahlung von der Bezahleinrichtung eine Quittung in elektronischer Form über RFID-Technologie an das RFID-fähige Mobiltelefon enthaltend die Transaktionsnummer übermittelt wird, wobei beim Verlassen des durch die zumindest eine Zutrittskontrolleinrichtung begrenzten Ortes die Zutrittsberechtigung über RFID-Technologie anhand des Mobiltelefons enthaltend die Transaktionsnummer identifiziert wird und mittels einer RFID - Interaktion anhand der im Mobiltelefon abgelegten Quittung in elektronischer Form überprüft wird, ob die erforderliche Zahlung erfolgt ist. Hierbei kann die Quittung die Transaktionsnummer enthalten. Es ist auch möglich, nach erfolgter Bezahlung, die Quittung in elektronischer Form und optional die Transaktionsnummer an ein anderes Mobiltelefon zu übertragen, mittels dessen die Überprüfung der Zahlung zum Zweck der Gewährung des Auslasses durch die Zutrittskontrolleinrichtung erfolgt.

Gemäß einer weiteren Ausgestaltung der Erfindung kann anstelle der Erstellung und Übermittlung der Quittung in elektronischer Form nach erfolgter Bezahlung von der Bezahleinrichtung über ein LAN- oder WAN Netzwerk ein Signal an die zumindest eine Zutrittskontrolleinrichtung oder an einen mit der Zutrittskontrolleinrichtung verbundenen Computer (z.B. an einen Server) übermittelt werden, enthaltend die Transaktionsnummer sowie die Information, dass für die der Transaktionsnummer zugeordnete Zutrittsberechtigung die Zahlung erfolgt ist, so dass nach einer RFID-Interaktion zwischen einem Mobiltelefon enthaltend die Transaktionsnummer und der Zutrittskontrolleinrichtung der Benutzer den durch die Zutrittskontrolleinrichtung begrenzten Ort verlassen kann.

Die Transaktionsnummer kann bei allen beschriebenen Fällen bei der Erfassung des Zutritts generiert und von der Zutrittskontrolleinrichtung über RFID-Technologie an das Mobiltelefon übertragen werden, wobei für den Fall einer vor dem Zutritt erfolgten Buchung einer Zutrittsberechtigung, die Transaktionsnummer bei der Buchung generiert und an das Mobiltelefon des Benutzers übertragen wird. Alternativ dazu kann die Transaktionsnummer von der Zutrittskontrolleinrichtung bei der Erfassung des Zutritts anhand von im Mobiltelefon gespeicherten Buchungsdaten generiert und an das Mobiltelefon übertragen werden. Hierbei ist die Zutrittskontrolleinrichtung mit einem Computer des Buchungssystems verbunden, so dass bei einer vor dem Zutritt erfolgten Buchung einer Zutrittsberechtigung die im Buchungssystem abgelegten Daten zur Überprüfung der Buchung bzw. der Zutrittsberechtigung mit der Transaktionsnummer bzw. mit im Mobiltelefon gespeicherten Buchungsdaten verglichen werden.

Erfindungsgemäß kann für den Fall einer vor dem Zutritt erfolgten Buchung bzw. Vorreservierung einer Zutrittsberechtigung, bei der Erfassung des Zutritts eine Seriennummer des Mobiltelefons und/oder der SIM-Karte und/oder des Speichermoduls des Mobiltelefons mittels RFID-Technologie an die Zutrittskontrolleinrichtung und vorzugsweise an einen mit der Zutrittskontrolleinrichtung verbundenen Computer übertragen werden und mit entsprechenden bei der Buchung angegebenen Daten zur Überprüfung der Gültigkeit der Buchung verglichen werden.

Es ist erfindungsgemäß auch möglich, dass bei der Erfassung des Zutritts eine Seriennummer des Mobiltelefons und/oder der SIM-Karte und/oder eines Sicherheitsspeichers (beispielsweise einer SD-Karte) und/oder des Speichermoduls des Mobiltelefons mittels RFID-Technologie an die Zutrittskontrolleinrichtung und vorzugsweise an einen mit der Zutrittskontrolleinrichtung verbundenen Computer übertragen wird, unabhängig davon, ob eine Buchung vorliegt oder nicht, um den Zutrittsvorgang zu dokumentieren.

Des weiteren kann vorgesehen sein, dass von der Bezahleinrichtung bzw. von der Zutrittskontrolleinrichtung eine Quittung in Papierform erstellt wird.

Im Rahmen einer vorteilhaften Weiterbildung der Erfindung kann vorgesehen sein, dass bei der Erfassung des Zutritts in den durch die zumindest eine Zutrittskontrolleinrichtung begrenzten Ort über RFID-Technologie am Mobiltelefon enthaltend die Transaktionsnummer, über das die Erfassung erfolgt, ein Zähler und/oder eine Software, beispielsweise ein Applet gestartet wird oder gestartet werden kann, wodurch sich der Benutzer jederzeit über die anfallenden Gebühren informieren kann.

Des weiteren kann vorgesehen sein, dass bei der Erfassung des Zutritts beim Eintreten in den durch die zumindest eine Zutrittskontrolleinrichtung begrenzten Ort über RFID-Technologie an das Mobiltelefon, über das die Erfassung des Zutritts erfolgt (und welches die Transaktionsnummer enthält), zutrittsbezogene Informationen übermittelt werden; diese Informationen können beispielsweise Informationen über freie oder vom Benutzer vorreservierte Parkplätze in einem Parkhaus sein, enthaltend optional eine Wegbeschreibung zu diesen Parkplätzen, oder es können allgemeinere Informationen bezüglich Zahlungsmodalitäten und dergleichen sein.

Des weiteren wird gemäß der Erfindung vorgeschlagen, dem Benutzer eines Mobiltelefons die Möglichkeit zu geben, im voraus einen bestimmten Platz in einem durch zumindest eine Zutrittskontrolleinrichtung begrenzten Ort vorzureservieren. Beispielsweise kann ein bestimmter Parkplatz, ein Parkplatz in einem bestimmten Bereich eines Parkhauses, ein bestimmter Platz in einem Konzertsaal oder in einem Stadion vorreserviert werden. Dies kann insbesondere sehr vorteilhaft sein, wenn es sich bei einem Parkhaus um ein Flughafenparkhaus handelt; durch das erfindungsgemäße Verfahren kann der Benutzer einen Parkplatz in der Nähe der Abfluggates vorreservieren, wodurch eine erhebliche Zeitersparnis entsteht.

In diesem Fall kann der Benutzer die Vorreservierung über eine Internetverbindung mittels seines Mobiltelefons durchführen, die beispielsweise durch die Interaktion seines Mobiltelefons mit einem z.B. auf einer Karte angebrachten RFID-Label enthaltend einen entsprechenden Internetlink initiiert wird. Hierbei kann vorgesehen sein, dass eine Gebühr für die Vorreservierung anfällt, die gleich online bezahlt werden kann oder beim Verlassen des durch die zumindest eine Zutrittskontrolleinrichtung begrenzten Ortes zusammen mit den fälligen Gebühren für die Zutrittsberechtigung bezahlt werden kann.

Die Daten der Vorreservierung werden in elektronischer Form im Mobiltelefon des Benutzers bzw. in einer dem Mobiltelefon zugeordneten Speichereinheit gespeichert und beim Eintritt in den durch die zumindest eine Zutrittskontrolleinrichtung begrenzten Ort während der Erfassung des Zutritts zur Identifikation der Vorreservierung mittels einer RFID-Interaktion zwischen dem Mobiltelefon und der Zutrittskontrolleinrichtung von der Zutrittskontrolleinrichtung überprüft; wie bereits erläutert kann über RFID-Technologie eine Wegbeschreibung zum vorreservierten Platz an das Mobiltelefon des Benutzers übermittelt werden.

Für den Fall von Zutrittskontrolleinrichtungen, bei denen die Bezahlung vor dem Betreten des durch die Zutrittskontrolleinrichtungen begrenzten Ortes erfolgt, wie es beispielsweise bei Konzerten oder Sportveranstaltungen der Fall ist, ist erfindungsgemäß vorgesehen, dass ein zumindest ein der Zutrittsberechtigung zugeordnetes Element enthaltender Datenset auf ein Mobiltelefon in elektronischer Form übermittelt wird, wobei dies vorzugsweise durch die Herstellung einer Internetverbindung zwischen einem Mobiltelefon und einer die Zutrittsberechtigung anbietenden Internetseite zur Bestellung und Bezahlung der Zutrittsberechtigung, durch eine RFID-Interaktion zwischen dem Mobiltelefon und einer Einrichtung zum Verkauf der Zutrittsberechtigung zur Bestellung und Bezahlung der Zutrittsberechtigung oder durch eine berührungslose Übertragung, beispielsweise durch eine Bluetooth®-, eine RFID- oder eine Infrarotübertragung, von einem Computer erfolgt, mittels dessen die Zutrittsberechtigung bestellt und bezahlt wird.

Beim Eintreten in den durch die zumindest eine Zutrittskontrolleinrichtung begrenzten Ort erfolgt die Überprüfung der Zutrittsberechtigung und Gewährung des Zutritts mittels einer RFID-Interaktion zwischen einem Mobiltelefon enthaltend den Datenset und der Zutrittskontrolleinrichtung, wobei zum Zweck der Identifizierung der Zutrittsberechtigung eine eineindeutige der Zutrittsberechtigung zugeordnete Transaktionsnummer verwendet wird, welche bei der Bestellung und Bezahlung der Zutrittsberechtigung generiert und an das Mobiltelefon des Benutzers übertragen wird oder von der Zutrittskontrolleinrichtung bei der Erfassung des Zutritts anhand der Daten des Datensets generiert und an das Mobiltelefon übertragen wird.

Für den Fall von Zutrittskontrolleinrichtungen, bei denen die Bezahlung erst beim Eintreten in den durch die zumindest eine Zutrittskontrolleinrichtung begrenzten Ortes erfolgt, erfolgt die Bestellung der Zutrittsberechtigung über eine RFID-Interaktion zwischen einer Zutrittskontrolleinrichtung und einem Mobiltelefon; die Bezahlung der Zutrittsberechtigung wird über eine RFID-Interaktion zwischen der Zutrittskontrolleinrichtung und dem Mobiltelefon und im Mobiltelefon gespeicherten Kreditkarten- oder Bankverbindungsdaten, die an die Zutrittskontrolleinrichtung übermittelt werden, über eine Direktbezahlung über die Telefonnummer des Mobiltelefons, über eine Barzahlung oder durch Auslösen einer Kreditkartentransaktion durch Auslesen der Kreditkartendaten von einer maschinenlesbaren oder RFID-lesbaren Kreditkarte durchgeführt, wobei nach erfolgter Bezahlung eine eineindeutige der Zutrittsberechtigung zugeordnete Transaktionsnummer generiert und an das Mobiltelefon übertragen wird, wobei der Zutritt gewährt wird.

In vorteilhafter Weise ist für den Fall von Zutrittskontrolleinrichtungen, bei denen die Bezahlung vor dem oder beim Betreten des durch die Zutrittskontrolleinrichtungen begrenzten Ortes erfolgt, gemäß einer Weiterbildung der Erfindung die der Zutrittsberechtigung zugeordnete Transaktionsnummer bzw. sind die im Datenset enthaltene Daten vor dem Zutritt in den durch die zumindest eine Zutrittskontrolleinrichtung begrenzten Ort von dem Mobiltelefon auf ein anderes Mobiltelefon berührungslos übertragbar, über das dann der Zutritt erfolgt.

Vorzugsweise ist die der Zutrittsberechtigung zugeordnete Transaktionsnummer bzw. sind die Daten des Datensets von dem Mobiltelefon auf ein anderes Mobiltelefon über das GSM-Netzwerk, mittels RFID-Technologie, über eine Infrarotverbindung, über eine Bluetooth ® -Verbindung, oder über eine andere Mobiltelefon Verbindungstechnologie übertragbar.

Des weiteren ist im Rahmen einer Variante des erfindungsgemäßen Verfahrens für den Fall von Zutrittskontrolleinrichtungen, bei denen die Bezahlung vor dem oder beim Betreten des durch die Zutrittskontrolleinrichtungen begrenzten Ortes erfolgt, vorgesehen, dass während des Zutrittsberechtigungsüberprüfungsprozesses über RFID-Technologie von einer Zutrittskontrolleinrichtung an das Mobiltelefon enthaltend die Transaktionsnummer zutrittsbezogene Informationen übermittelt werden. Beispielsweise kann ein Benutzer beim Betreten eines Konzertsaales, eines Stadions oder eines Verkehrsmittels Informationen enthalten, die ihn zu einem freien Platz oder zu einem vorreservierten Platz führen. Es ist auch möglich, dass für den Fall einer Veranstaltung der Benutzer auf diese Weise Informationen über den Ablauf der Veranstaltung und über zur Verfügung stehende Angebote erhält.

Im Rahmen sämtlicher Varianten des erfindungsgemäßen Verfahrens erfolgt die Bestellung der Zutrittsberechtigung ohne die Notwendigkeit der Angabe einer Telefonnummer.

Als RFID-Technologie kann jede RFID-Technologie verwendet werden, wobei vorzugsweise NFC - Technologie verwendet wird (NFC - Technologie steht für Near-Field-Communication - Technologie, die bekannterweise eine auf RFID-Funktechnologie basierende Funktechnologie für kurze Distanzen ist).

Des weiteren kann zur Durchführung des erfindungsgemäßen Verfahrens ein gemäß der EP 1424657 A1 der Anmelderin ausgebildetes RFID-fähiges Mobiltelefon verwendet werden, in das über eine Applikationsschnittstelle eine zusätzliche Hardware und eine Software zur Simulation eines elektronischen Tickets für RFID-Systeme zum Datenaustausch mit dem Lesegerät bzw. mit einer Zutrittskontrolleinrichtung integriert ist. Hierbei besteht die zusätzliche Hardware aus einer RFID-Antenne sowie einem Sender und einem Empfänger als Schnittstelle zu der RFID-Antenne, wobei der Sender und der Empfänger direkt an die Codier- und Decodiereinrichtung des Mobiltelefons angeschlossen sind.

## Patentansprüche

1. Verfahren zur Bestellung und Bezahlung einer Zutrittsberechtigung, zur Überprüfung der Zutrittsberechtigung, zur Erteilung einer Zutrittsberechtigung und/oder zur Bereitstellung von zutrittsbezogenen Informationen, wobei ein zumindest ein der Zutrittsberechtigung zugeordnetes Element enthaltender Datenset in einem Mobiltelefon oder einer dem Mobiltelefon zugeordneten Speichereinheit speicherbar ist und die Überprüfung und/oder die Erteilung der Zugangsberechtigung anhand einer berührungslosen Interaktion zwischen dem Mobiltelefon und einer Zutrittskontrolleinrichtung erfolgt, **dadurch gekennzeichnet, dass** für den Fall von Zutrittskontrolleinrichtungen, bei denen die Bezahlung beim Verlassen des durch die zumindest eine Zutrittskontrolleinrichtung begrenzten Ortes erfolgt, die Erfassung des Zutritts beim Zutritt über die Zutrittskontrolleinrichtung über ein RFID-fähiges Mobiltelefon und die Interaktion des Mobiltelefons mit der Zutrittskontrolleinrichtung mittels RFID-Technologie durchgeführt wird, wobei zum Zweck der Erteilung und Identifizierung der Zutrittsberechtigung und der Bezahlung derselben eine eineindeutige der Zutrittsberechtigung zugeordnete Transaktionsnummer verwendet wird, welche vom Mobiltelefon auf ein anderes Mobiltelefon berührungslos übertragbar ist, wobei beim Verlassen des durch die zumindest eine Zutrittskontrolleinrichtung begrenzten Ortes die Zutrittsberechtigung mittels einer RFID - Interaktion zwischen der Zutrittskontrolleinrichtung und einem Mobiltelefon enthaltend die Transaktionsnummer identifiziert wird, wobei die erforderliche Bezahlung über RFID-Technologie und in einem Mobiltelefon enthaltend die Transaktionsnummer gespeicherten Kreditkarten- oder Bankverbindungsdaten, die an die Zutrittskontrolleinrichtung übermittelt werden, über eine Direktbezahlung über die Telefonnummer des Mobiltelefons enthaltend die Transaktionsnummer, über eine mittels des die Transaktionsnummer enthaltenden Mobiltelefons hergestellte Internetverbindung, über eine Barzahlung oder durch Auslösen einer Kreditkartentransaktion durch Auslesen der Kreditkartendaten von einer maschinenlesbaren oder RFID-lesbaren Kreditkarte erfolgt.

2. Verfahren zur Bestellung und Bezahlung einer Zutrittsberechtigung, zur Überprüfung der Zutrittsberechtigung, zur Erteilung einer Zutrittsberechtigung und/oder zur Bereitstellung von zutrittsbezogenen Informationen, wobei ein zumindest ein der Zutrittsberechtigung zugeordnetes Element enthaltender Datenset in einem Mobiltelefon oder einer dem Mobiltelefon zugeordneten Speichereinheit speicherbar ist und die Überprüfung und/oder die Erteilung der Zugangsberechtigung anhand einer berührungslosen Interaktion zwischen einem Mobiltelefon und einer Zutrittskontrolleinrichtung erfolgt, **dadurch gekennzeichnet, dass** für den Fall von Zutrittskontrolleinrichtungen, bei denen die Bezahlung vor dem Verlassen des durch die zumindest eine Zutrittskontrolleinrichtung begrenzten Ortes an einer Bezahleinrichtung erfolgt, die Erfassung des Zutritts beim Zutritt über die Zutrittskontrolleinrichtung über ein RFID-fähiges Mobiltelefon und die Interaktion des Mobiltelefons mit der Zutrittskontrolleinrichtung mittels RFID-Technologie durchgeführt wird, wobei zum Zweck der Identifizierung der Zutrittsberechtigung und der Bezahlung derselben eine eineindeutige der Zutrittsberechtigung zugeordnete Transaktionsnummer verwendet wird, welche vom Mobiltelefon auf ein anderes Mobiltelefon berührungslos übertragbar ist, wobei zum Zweck der Bezahlung die Zutrittsberechtigung mittels einer RFID - Interaktion zwischen einer Bezahleinrichtung und einem Mobiltelefon enthaltend die Transaktionsnummer identifiziert wird, wobei die Bezahlung über in einem Mobiltelefon enthaltend die Transaktionsnummer gespeicherten Kreditkarten- oder Bankverbindungsdaten, die an eine Bezahleinrichtung übermittelt werden, über eine Direktbezahlung über die Telefonnummer des Mobiltelefons enthaltend die Transaktionsnummer, über eine mittels des Mobiltelefons enthaltend die Transaktionsnummer hergestellte Internetverbindung, über eine Barzahlung oder durch Auslösen einer Kreditkartentransaktion durch Auslesen der Kreditkartendaten von einer maschinenlesbaren oder RFID-lesbaren Kreditkarte erfolgt und wobei nach erfolgter Bezahlung die Quittung in elektronischer Form von der Bezahleinrichtung über RFID-Technologie an das RFID-fähige Mobiltelefon enthaltend die Transaktionsnummer übermittelt wird und wobei beim Verlassen des durch die zumindest eine Zutrittskontrolleinrichtung begrenzten Ortes die Zutrittsberechtigung über RFID-Technologie anhand eines Mobiltelefons enthaltend die Transaktionsnummer identifiziert wird und mittels einer RFID - Interaktion anhand der im Mobiltelefon abgelegten Quittung in elektronischer Form überprüft wird, ob die erforderliche Zahlung erfolgt ist.

3. Verfahren nach Anspruch 2, **dadurch gekennzeichnet, dass** anstelle der Erstellung und Übermittlung der Quittung in elektronischer Form, nach erfolgter Bezahlung von der Bezahleinrichtung ein Signal an die zumindest eine Zutrittskontrolleinrichtung oder an einen mit der Zutrittskontrolleinrichtung verbundenen Computer übermittelt wird, enthaltend die Transaktionsnummer sowie die Information, dass für die der Transaktionsnummer zugeordnete Zutrittsberechtigung die Zahlung erfolgt ist, so dass nach einer RFID-Interaktion zwischen einem Mobiltelefon enthaltend die Transaktionsnummer und der Zutrittskontrolleinrichtung der Benutzer den durch die Zutrittskontrolleinrichtung begrenzten Ort verlassen kann.

4. Verfahren nach Anspruch 1, 2 oder 3, **dadurch gekennzeichnet, dass** die Transaktionsnummer bei der Erfassung des Zutritts generiert und von der Zutrittskontrolleinrichtung über RFID-Technologie an das Mobiltelefon übertragen wird oder, für den Fall einer vor dem Zutritt erfolgten Buchung bzw. Vorreservierung einer Zutrittsberechtigung, dass die Transaktionsnummer bei der Buchung generiert und an das Mobiltelefon des Benutzers übertragen wird oder dass sie von der Zutrittskontrolleinrichtung bei der Erfassung des Zutritts anhand von im Mobiltelefon gespeicherten Buchungsdaten generiert und an das Mobiltelefon übertragen wird.

5. Verfahren nach Anspruch 1, 2, 3 oder 4, **dadurch gekennzeichnet, dass** bei der Erfassung des Zutritts eine Seriennummer des Mobiltelefons und/oder der SIM-Karte und/oder eines Sicherheitsspeichers und/oder des Speichermoduls des Mobiltelefons mittels RFID-Technologie an die Zutrittskontrolleinrichtung übertragen wird.

6. Verfahren nach einem der vorangehenden Ansprüche, **dadurch gekennzeichnet, dass** bei der Erfassung des Zutritts in den durch die zumindest eine Zutrittskontrolleinrichtung begrenzten Ort über RFID-Technologie am Mobiltelefon enthaltend die Transaktionsnummer ein Zähler und/oder eine Software gestartet wird oder gestartet werden kann, wodurch sich der Benutzer jederzeit über die anfallenden Gebühren informieren kann.

7. Verfahren nach einem der vorangehenden Ansprüche, **dadurch gekennzeichnet, dass** bei der Erfassung des Zutritts in den durch die zumindest eine Zutrittskontrolleinrichtung begrenzten Ort über RFID-Technologie an das Mobiltelefon enthaltend die Transaktionsnummer zutrittsbezogene Informationen übermittelt werden.

8. Verfahren nach einem der vorangehenden Ansprüche, **dadurch gekennzeichnet, dass** über eine Internetverbindung mittels eines Mobiltelefons eine Vorreservierung für einen bestimmten Platz in dem durch die zumindest eine Zutrittskontrolleinrichtung begrenzten Ort durchgeführt wird.

9. Verfahren nach Anspruch 8, **dadurch gekennzeichnet, dass** die Herstellung der Internetverbindung durch die Interaktion des Mobiltelefons mit einem RFID-Label, enthaltend einen entsprechenden Internetlink initiiert wird.

10. Verfahren nach Anspruch 8 oder 9, **dadurch gekennzeichnet, dass** für den Fall, dass eine Gebühr für die Vorreservierung anfällt, die Gebühr bei der Durchführung der Vorreservierung online oder beim Verlassen bzw. vor dem Verlassen des durch die zumindest eine Zutrittskontrolleinrichtung begrenzten Ortes zusammen mit den fälligen Gebühren bezahlt wird.

11. Verfahren nach Anspruch 8, 9 oder 10, **dadurch gekennzeichnet, dass** die Daten der Vorreservierung in elektronischer Form im Mobiltelefon oder in einer dem Mobiltelefon zugeordneten Speichereinheit gespeichert werden und beim Eintritt in den durch die zumindest eine Zutrittskontrolleinrichtung begrenzten Ort während der Erfassung des Zutritts zur Identifikation der Vorreservierung mittels einer RFID - Interaktion von der Zutrittskontrolleinrichtung überprüft werden.

12. Verfahren zur Bestellung und Bezahlung einer Zutrittsberechtigung, zur Überprüfung der Zutrittsberechtigung, zur Erteilung einer Zutrittsberechtigung und/oder zur Bereitstellung von zutrittsbezogenen Informationen, wobei ein zumindest ein der Zutrittsberechtigung zugeordnetes Element enthaltender Datenset in einem Mobiltelefon oder einer dem Mobiltelefon zugeordneten Speichereinheit speicherbar ist und die Überprüfung und/oder die Erteilung der Zugangsberechtigung anhand einer berührungslosen Interaktion zwischen dem Mobiltelefon und einer Zutrittskontrolleinrichtung erfolgt, **dadurch gekennzeichnet, dass** für den Fall von Zutrittskontrolleinrichtungen, bei denen die Bezahlung vor dem Betreten des durch die zumindest eine Zutrittskontrolleinrichtung begrenzten Ortes erfolgt, ein zumindest ein der Zutrittsberechtigung zugeordnetes Element enthaltender Datenset auf ein Mobiltelefon in elektronischer Form übermittelt wird, wobei dies durch die Herstellung einer Internetverbindung zwischen dem Mobiltelefon und einer die Zutrittsberechtigung anbietenden Internetseite zur Bestellung und Bezahlung der Zutrittsberechtigung, durch eine RFID-Interaktion zwischen dem Mobiltelefon und einer Einrichtung zum Verkauf der Zutrittsberechtigung zur Bestellung und Bezahlung der Zutrittsberechtigung oder durch eine berührungslose Übertragung von einem Computer erfolgt, mittels dessen die Zutrittsberechtigung bestellt und bezahlt wird und wobei beim Eintreten in den durch die zumindest eine Zutrittskontrolleinrichtung begrenzten Ort die Überprüfung der Zutrittsberechtigung und Gewährung des Zutritts mittels einer RFID-Interaktion zwischen einem Mobiltelefon enthaltend den Datenset und der Zutrittskontrolleinrichtung erfolgt, wobei zum Zweck der Identifizierung der Zutrittsberechtigung eine eineindeutige der Zutrittsberechtigung zugeordnete Transaktionsnummer verwendet wird, welche bei der Bestellung und Bezahlung der Zutrittsberechtigung generiert und an das Mobiltelefon des Benutzers übertragen wird oder von der Zutrittskontrolleinrichtung bei der Erfassung des Zutritts anhand der Daten des Datensets generiert und an das Mobiltelefon übertragen wird.

13. Verfahren zur Bestellung und Bezahlung einer Zutrittsberechtigung, zur Überprüfung der Zutrittsberechtigung, zur Erteilung einer Zutrittsberechtigung und/oder zur Bereitstellung von zutrittsbezogenen Informationen, wobei ein zumindest ein der Zutrittsberechtigung zugeordnetes Element enthaltender Datenset in einem Mobiltelefon oder einer dem Mobiltelefon zugeordneten Speichereinheit speicherbar ist und die Überprüfung und/oder die Erteilung der Zugangsberechtigung anhand einer berührungslosen Interaktion zwischen dem Mobiltelefon und einer Zutrittskontrolleinrichtung erfolgt, **dadurch gekennzeichnet, dass** für den Fall von Zutrittskontrolleinrichtungen, bei denen die Bezahlung beim Eintreten in den durch die zumindest eine Zutrittskontrolleinrichtung begrenzten Ortes erfolgt, die Bestellung der Zutrittsberechtigung über eine RFID-Interaktion zwischen einer Zutrittskontrolleinrichtung und dem Mobiltelefon erfolgt, wobei die Bezahlung der Zutrittsberechtigung über eine RFID-Interaktion zwischen der Zutrittskontrolleinrichtung und dem Mobiltelefon und im Mobiltelefon gespeicherten Kreditkarten- oder Bankverbindungsdaten, die an die Zutrittskontrolleinrichtung übermittelt werden, über eine Direktbezahlung über die Telefonnummer des Mobiltelefons, über eine Barzahlung oder durch Auslösen einer Kreditkartentransaktion durch Auslesen der Kreditkartendaten von einer maschinenlesbaren oder RFID-lesbaren Kreditkarte erfolgt, wobei nach erfolgter Bezahlung eine eineindeutige der Zutrittsberechtigung zugeordnete Transaktionsnummer generiert und an das Mobiltelefon übertragen wird, wobei der Zutritt gewährt wird.

14. Verfahren nach Anspruch 12 oder 13, **dadurch gekennzeichnet, dass** während des Zutrittsberechtigungsüberprüfungsprozesses von der Zutrittskontrolleinrichtung über RFID-technologie an das Mobiltelefon enthaltend die Transaktionsnummer zutrittsbezogene Informationen übermittelt werden.

15. Verfahren nach Anspruch 14, **dadurch gekennzeichnet, dass** die zutrittsbezogenen Informationen den Benutzer zu einem freien oder zu einem vorreservierten bzw. der Zutrittsberechtigung zugeordneten Platz führen.

16. Verfahren nach einem der Ansprüche 12 bis 15, **dadurch gekennzeichnet, dass** die der Zutrittsberechtigung zugeordnete Transaktionsnummer bzw. die Daten des Datensets vor dem Zutritt in den durch die zumindest eine Zutrittskontrolleinrichtung begrenzten Ort von dem Mobiltelefon auf ein anderes Mobiltelefon berührungslos übertragbar sind, über das dann der Zutritt erfolgt.

17. Verfahren nach Anspruch 16, **dadurch gekennzeichnet, dass** die der Zutrittsberechtigung zugeordnete Transaktionsnummer bzw. die Daten des Datensets von dem Mobiltelefon auf ein anderes Mobiltelefon über das GSM-Netzwerk, mittels RFID-Technologie, über eine Infrarotverbindung, über eine Bluetooth ® -Verbindung, oder über eine andere Mobiltelefon Verbindungstechnologie übertragbar sind.

18. Verfahren nach einem der vorangehenden Ansprüche, **dadurch gekennzeichnet, dass** als RFID-Technologie NFC-Technologie verwendet wird.

19. Verfahren nach einem der vorangehenden Ansprüche, **dadurch gekennzeichnet, dass** zur dessen Durchführung ein Mobiltelefon verwendet wird, in das über eine Applikationsschnittstelle eine zusätzliche Hardware und eine Software zur Simulation eines elektronischen Tickets für RFID-Systeme zum Datenaustausch mit dem Lesegerät bzw. mit einer Zutrittskontrolleinrichtung integriert ist, wobei die zusätzliche Hardware aus einer RFID-Antenne, einem Sender und einem Empfänger als Schnittstelle zu der RFID-Antenne besteht und wobei der Sender und der Empfänger direkt an die Codier- und Decodiereinrichtung des Mobiltelefons angeschlossen sind.
